# EUROPÄISCHE PATENTSCHRIFT

(11) **EP 2 500 186 B1**
(45) Veröffentlichungstag und Bekanntmachung des Hinweises auf die Patenterteilung: **26.06.2019**
(21) Anmeldenummer: 12151015.0
(22) Anmeldetag: 13.01.2012
(51) Int. Cl.: B60C 11/13, B60C 11/03

(54) **Fahrzeugluftreifen mit teilweiser Rillengrundanhebung**
Pneumatic tyre for a vehicle with partially elevated groove bottom section
Pneus de véhicule avec base de rainure partiellement élévée

(30) Priorität: 15.03.2011 DE 102011001295
(43) Veröffentlichungstag der Anmeldung: 19.09.2012
(73) Patentinhaber: Continental Reifen Deutschland GmbH, 30165 Hannover (DE)
(72) Erfinder: Behr, Ulrich, 30169 Hannover (DE)
(74) Vertreter: Finger, Karsten

(56) Entgegenhaltungen:
- EP-A1- 0 230 765
- EP-A1- 0 855 292
- EP-A1- 1 685 981
- EP-A2- 0 844 107
- WO-A1-2009/060476
- DE-A1- 4 018 463
- DE-A1-102009 026 086
- DE-A1-102010 016 978
- US-A1- 2006 016 538

## Beschreibung

Die Erfindung betrifft einen Fahrzeugluftreifen - insbesondere für Personenkraftwagen - mit Laufstreifenprofil mit Rillen, welche jeweils zwei radial erhabene Profilelementen voneinander trennen, mit wenigstens einem in einer Rille ausgebildeten Steg, welcher quer zur Haupterstreckungsrichtung der Rille durch die Rille hindurch erstreckt ausgebildet ist und die beiden Profilelemente miteinander verbindet und welcher in radialer Richtung R ausgehend vom Rillengrund der Rille bis in einen radialen Abstand h₁ > 0 von der die Bodenkontaktoberfläche bildenden Mantelfläche des Laufstreifenprofiles erstreckt ausgebildet ist.

Laufstreifenprofile von Pkw-Reifen mit Profilblockreihen, in denen in Umfangsrichtung hintereinander angeordnete Profilblockelemente jeweils durch Querrillen voneinander getrennt sind, sind bekannt. Es ist bekannt, bei derartigen Laufstreifenprofilen in Umfangsrichtung benachbarte Profilblockelemente der Profilblockreihe durch in der Querrille ausgebildete Stege, welche sich quer zur Erstreckungsrichtung der Querrille von Profilblockelement zu Profilblockelement hindurch erstrecken, durch die Querrille hindurch an einander anzubinden, um auf diese Weise die zwecks guter Aquaplaning- und Nassgriffeigenschaften gewünschten Profilblockreihen mit einer verbesserten Umfangssteifigkeit auszubilden.

Es ist wünschenswert, derartige Stege zur Aufrechterhaltung eines hohen Profilnegativanteils in den Querrillen möglichst schmal auszubilden. Hierdurch unterliegen die Stege im Anbindungsbereich an das jeweilige Profilblockelement einer erhöhten Rissgefahr und sind bei der Herstellung des Reifens schwer rissfrei ein- und/oder ausformbar. Zur Vermeidung der Rissbildung und zur Sicherstellung einer rissbildungsfreien Ein- und/oder Ausformung ist es wünschenswert, die Stege relativ breit auszubilden, wodurch jedoch der Negativanteil der Querrille und somit die Aquaplaning-Fähigkeit eingeschränkt werden können.

Aus der EP 1 685 981 A1 sowie aus der WO 2009/060476 A1 ist es jeweils bekannt, in Querrillen eines Fahrzeugreifens einen Steg auszubilden, welcher mit geradlinigen Flanken und mit in radialer Richtung von innen nach außen hin konstant abnehmender Breite ausgebildet ist. Aus der EP 0 230 765 A1 ist es bekannt, Stege in Rillen entweder mit geradlinigen Flanken und somit mit längs ihrer radialen Erstreckung von innen nach außen hin konstant abnehmender Breite auszubilden oder aber die Stege mit derartig gekrümmten Flanken auszubilden, dass sie in radialer Richtung von innen nach außen hin mit degressiv abnehmender Breite ausgebildet sind. Aus der US 2006/0016538 A1 ist es bekannt, Stege in Umfangsrillen mit geradlinigen Flanken auszubilden. Die Stege sind dabei längs ihrer radialen Erstreckung entweder mit gleichbleibender Breite oder längs ihrer Erstreckung mit konstant abnehmender Breite ausgebildet. Lediglich im Übergangsbereich zum Rillengrund oder zur radial äußeren Oberfläche sind die Flanken abgerundet ausgebildet.

Aus der EP 0 855 292 A1 ist ein Fahrzeugreifen bekannt, bei dem Feineinschnitte mit einem veränderten Tiefenverlauf ausgebildet sind, wobei der Feineinschnittsgrund im Bereich der Absenkungen über ihren wesentlichen radialen Erstreckungsabschnitt geradlinig ausgebildet ist.

Aus der DE 10 2009 026086 A1 ist ein Fahrzeugluftreifen gemäß den Merkmalen des Oberbegriffs bekannt, wobei der Steg in den senkrecht zur Haupterstreckungsrichtung des Steges ausgebildeten Querschnittsebenen jeweils mit geradlinigen Stegflanken und mit längs der radialen Erstreckung des Steges von radial innen nach radial außen hin konstant abnehmender Breite ausgebildet ist.

Der Erfindung liegt die Aufgabe zugrunde, in einfacher Weise derartige Fahrzeugluftreifen unter Nutzung der Funktion und der Vorteile von Stegen mit verbesserter Ein- und Ausformbarkeit auszubilden.

Die Aufgabe wird erfindungsgemäß durch Ausbildung eines Fahrzeugluftreifens - insbesondere für Personenkraftwagen - mit Laufstreifenprofil mit Rillen, welche jeweils zwei radial erhabene Profilelementen voneinander trennen, mit wenigstens einem in einer Rille ausgebildeten Steg, welcher quer zur Haupterstreckungsrichtung der Rille durch die Rille hindurch erstreckt ausgebildet ist und die beiden Profilelemente miteinander verbindet und welcher in radialer Richtung R ausgehend vom Rillengrund der Rille bis in einen radialen Abstand h₁ > 0 von der die Bodenkontaktoberfläche bildenden Mantelfläche des Laufstreifenprofiles erstreckt ausgebildet ist, gemäß den Merkmalen von Anspruch 1 gelöst, bei dem der Steg in seinen Querschnittebenen senkrecht zu seiner von Profilelement zu Profilelement gerichteten Haupterstreckungsrichtung längs seiner radialen Erstreckung von innen nach außen mit einer progressiv abnehmenden Breite ausgebildet ist.

Diese Ausbildung ermöglicht durch die Formgebung der Stege eine einfache und sichere Ein- und/oder Ausformung des Laufstreifenprofiles im Bereich der Stege unter Reduktion von Rissbildung, wodurch die Vorteile der Stege zur Verbindung von Profilelementen auch bei schmalen Stegen in größerem Umfang genutzt und mehr Freiheitsgrade in der Konstruktion von Reifen ermöglicht werden können.

Besonders vorteilhaft ist die Ausbildung eines Fahrzeugluftreifens gemäß den Merkmalen von Anspruch 2, wobei der Querschnitt mit einer Querschnittskontur mit von der einen Flanke des Steges bis zur anderen Flanke des Steges mit monoton fallender Steigung zu der zur Radialen R senkrecht ausgebildeten Achse in der Querschnittebene verlaufend ausgebildet ist. Hierdurch kann die maximale Kraft zum Aufbau des Einpressdrucks zuverlässig während der Einformung stetig aufgebaut werden.

Besonders vorteilhaft zum Aufbau des Einpressdrucks ist die Ausbildung eines Fahrzeugluftreifens gemäß den Merkmalen von Anspruch 3, wobei der Querschnitt mit einer Querschnittkontur ausgebildet ist, die eine Parabel mit in radialer Richtung R nach innen hin geöffneten Schenkeln bildet.

Besonders vorteilhaft ist die Ausbildung eines Fahrzeugluftreifens gemäß den Merkmalen von Anspruch 4, wobei der Querschnitt mit einer Querschnittkontur ausgebildet ist, die die Hälfte einer Ellipse bildet, deren längere Hauptachse im Wesentlichen in radialer Richtung R erstreckt ist. Diese Ausbildung ermöglicht aufgrund des Steigungsverlaufes ihrer Flanken eine besonders gute Ein- und Ausformbarkeit auch bei Stegen mit großer radialer Erstreckungshöhe unter Beibehaltung einer kleinen Stegbreite.

Besonders vorteilhaft ist die Ausbildung eines Fahrzeugluftreifens gemäß den Merkmalen von Anspruch 5, wobei die beiden den Steg begrenzenden Stegflanken im Querschnitt mit abgerundetem Übergang zum Rillengrund ausgebildet sind. Hierdurch können die Kerbkräfte im Rillengrund zusätzlich reduziert werden.

Besonders vorteilhaft ist die Ausbildung eines Fahrzeugluftreifens gemäß den Merkmalen von Anspruch 6, wobei die Profilelemente Profilblockelemente einer Profilblockreihe und die Rille eine Quer- oder Schrägrille der Profilblockreihe bildet.

Besonders vorteilhaft ist die Ausbildung eines Fahrzeugluftreifens gemäß den Merkmalen von Anspruch 7, wobei in der Rille zwei in axialer Richtung A des Reifens von einander beabstandete Stege ausgebildet sind, die die beiden Profilblockelemente miteinander verbinden. Dies ermöglicht eine Stabilisierung der Blockecken der Profilblockelemente und die Einstellung der jeweils benötigten Quer- und Längssteifigkeit der Profilblockelemente und der Profilblockreihe.

Besonders vorteilhaft ist die Ausbildung eines Fahrzeugluftreifens gemäß den Merkmalen von Anspruch 8, wobei der Steg mit einem Abstand a zur nächstgelegenen Umfangsrille ausgebildet ist mit 0mm≤ a ≤ 2mm ausgebildet ist. Der Steg im axialen Endbereich der Querrille bewirkt eine Versteifung sowohl in Umfangsrichtung als auch eine Versteifung gegen Verwindung des Profilblockelementes um eine radiale Achse durch das Profilblockelement und gegen eine Verbiegung um Parallelen zur Umfangsrichtung im axialen Endbereichen des Profilblockelementes. Die zwischen der von der benachbarten Umfangsrille gebildeten Rillenwand und der Profilblockelementmantelfläche gebildete Kante ist ebenfalls gegen Verbiegen gesichert, wodurch die Handling-Eigenschaften zusätzlich verbessert werden. Die für das Handling wichtige von der axial das Profilblockelement begrenzenden Rillenwand der Umfangsrille und von der in Umfangsrichtung das Profilblockelement begrenzenden Rillenwand der Querrille eingeschlossene Profilblockelementecke ist ebenfalls gegen Verwindung gesichert, wodurch sie ihre volle für das Handling wichtige Griffwirkung entfalten kann.

Die Erfindung ist im Folgenden an Hand der in den Figuren 1 bis 3 dargestellten Ausführungsbeispiele am Beispiel eines PKW-Sommerreifens radialer Bauart näher erläutert. Darin zeigen
- Fig. 1: einen Umfangsabschnitt eines Laufstreifenprofils eines Fahrzeugluftreifens für Personenkraftwagen mit Sommerreifenprofil,
- Fig. 2: den Querschnitt durch eine Profilblockelementreihe von Fig.1 gemäß Schnittdarstellung II-II von Fig.1 und
- Fig. 3: den Querschnitt durch das Laufstreifenprofil von Fig.1 gemäß Schnittdarstellung III-III von Fig.1.

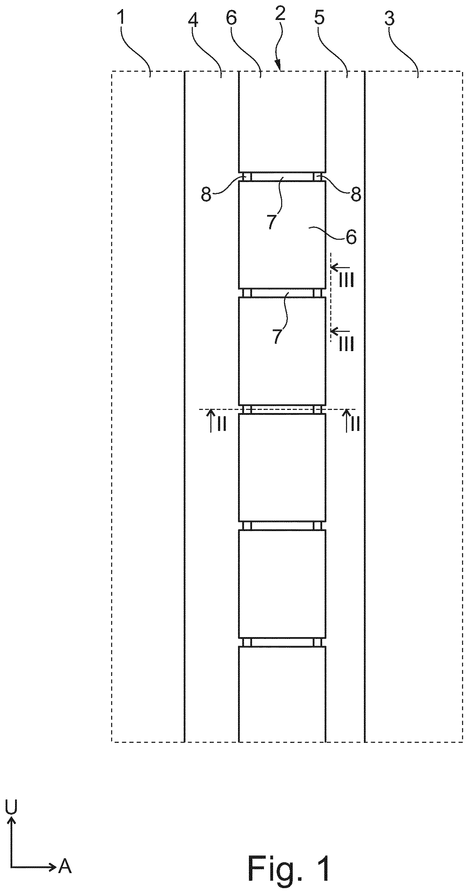

Die Fig.1 bis Fig.3 zeigen ein Laufstreifenprofil eines Fahrzeugluftreifes für Personenkraftwagen in radialer Bauart. Das Laufstreifenprofil ist ein Sommerreifenprofil. Fig. 1 zeigt einen Ausschnitt eines Laufstreifenprofils innerhalb der Bodenaufstandsbreite eines Fahrzeugluftreifens, bei dem in axialer Richtung A des Fahrzeugluftreifens nebeneinander angeordnet eine Profilrippe 1, eine Umfangsrille 4, eine Profilblockreihe 2, eine Umfangsrille 5 und eine Profilrippe 3 ausgebildet sind, die jeweils über den gesamten Umfang des Fahrzeugluftreifens erstreckt und in Umfangsrichtung U des Fahrzeugluftreifens ausgerichtet sind. Die Profilrippe 1 und die Profilblockreihe 2 sind in axialer Richtung A durch die Umfangsrille 4 voneinander beabstandet. Die Profilblockreihe 2 und die Profilrippe 3 sind in axialer Richtung A des Fahrzeugluftreifens durch die Umfangsrille 5 voneinander beabstandet. Die Profilblockreihe 2 ist in bekannter Weise aus in Umfangsrichtung U des Fahrzeugluftreifens hintereinander angeordneten und jeweils durch Querrillen 7 voneinander beabstandeten Profilblockelementen 6 ausgebildet. Die Querrillen 7 erstrecken sich in axialer Richtung A des Fahrzeugluftreifens ausgehend von der Umfangsrille 4 durch die gesamte Profilblockreihe 2 hindurch und münden in die Umfangsrille 5. Die Profilblockelemente 6 sind nach radial außen hin mit einer radial äußeren Oberfläche 9 begrenzt, welche Teil der die Bodenkontaktoberfläche bildenden Mantelfläche des Laufstreifenprofils bildet.

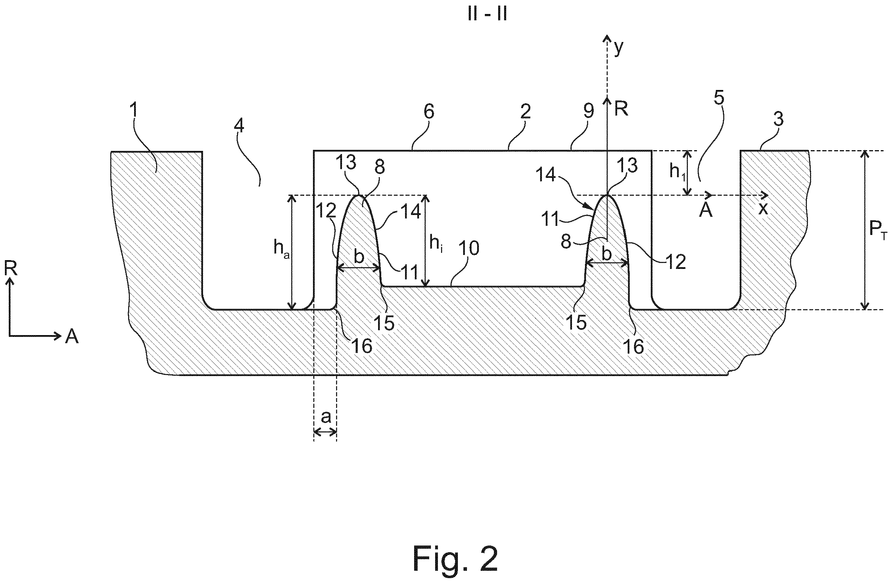

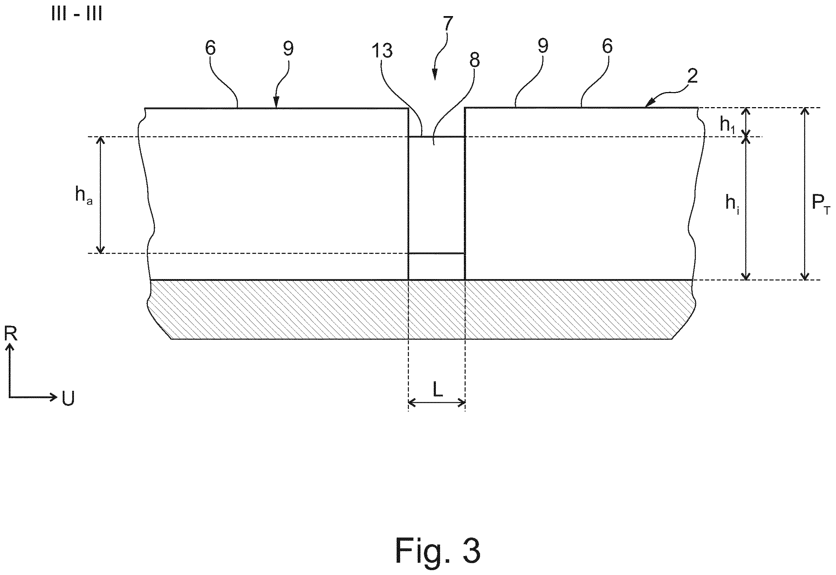

Die Querrillen 7 sind - wie in den Fig. 2 und 3 dargestellt - nach radial innen hin durch einen Rillengrund 10 begrenzt. Im Abstand a von der Umfangsrille 4 und im Abstand a von der Umfangsrille 5 ist jeweils ein Steg 8 im Rillengrund 10 ausgebildet, welcher sich in radialer Richtung R aus dem Rillengrund 10 nach außen erhebt und quer zur Haupterstreckungsrichtung der Querrillen 7 - d. h. im dargestellten Ausführungsbeispiel quer zur axialen Richtung A und somit in Umfangsrichtung U ausgerichtet - von dem einen durch die jeweilige Querrille 7 begrenzten Profilblockelement 6 bis zu dem anderen durch die Querrille 7 begrenzten Profilblockelement 6 erstreckt und die beiden Profilblockelemente 6 an einander anbindet. In den senkrecht zu der von Profilblockelement 6 zu Profilblockelement weisenden Haupterstreckungsrichtung der Stege 8 und somit im dargestellten Ausführungsbeispiel senkrecht zur Umfangsrichtung U ausgebildeten Querschnittebenen ist der Steg 8 jeweils mit einer Schnittkonturlinie 14 und mit einer in radialer Richtung von innen nach außen hin progressiv abnehmenden Breite b des Steges ausgebildet, wobei die Breite b senkrecht zur radialen Richtung R gemessen wird. Dabei bildet die den jeweiligen Steg 8 zur unmittelbar benachbarten Umfangsrille 5 bzw. 4 hinweisenden Seite hin begrenzende Stegflanke 12 und die den jeweiligen Steg 8 zu der zum anderen in der Querrille 7 ausgebildeten Steg 8 hin- und somit von der unmittelbar benachbarten Umfangsrille 5 bzw. 4 wegweisenden Seite hin begrenzende Stegflanke 11 einen Konturverlauf der Schnittkonturlinie 14, der eine in radialer Richtung nach innen hin geöffneten Parabel bildet. Der Steg 8 ist in radialer Richtung nach außen hin durch einen das Maximum der Parabel bildenden maximalen radialen Erstreckungspunkt 13 des Steges in der Querschnittebene begrenzt.

Der Querschnitt des Steges 8 ist somit in seiner Querschnittkontur längs der Erstreckung der zur Radialen R senkrecht ausgebildeten Achse - d.h. im dargestellten Ausführungsbeispiel längs der Erstreckung der axialen Richtung A - ausgehend von der einen Flanke 11 im Übergang zum Rillengrund 10 über die Flanke 11, das Maximum 13 und die Flanke 12 zum Rillengrund 10 mit monoton fallender Steigung des Konturverlaufes ausgebildet. Die Flanken 11 und 12 bilden in den senkrecht zur Haupterstreckungsrichtung der Stege und somit im dargestellten Ausführungsbeispiel senkrecht zur Umfangsrichtung U ausgebildeten Querschnitten die Schenkel der Parabel mit Maximum 13.

Die Außenkonturlinie 14 des Steges 8 ist - wie dargestellt und erläutert - parabelförmig mit in radialer Richtung R nach innen gerichteter Öffnung ausgebildet. In Fig. 2 ist ein kartesisches x-y-Koordinatensystem in den Querschnittebenen senkrecht zur Haupterstreckungsrichtung der Stege 8 - d. h. im dargestellten Ausführungsbeispiel senkrecht zur Umfangsrichtung des Fahrzeugreifens - eingezeichnet, wobei der Ursprung des x-y-Koordinatensystems im maximalen radialen Erstreckungspunkt 13 des Steges 8 und der Schnittkontur 14 des Steges 8 liegt, und wobei die x-Koordinate der axialen Richtung A und die y-Koordinate der radialen Richtung R entspricht. Die Parabelform bildet eine Parabel der Funktion f(x) = - (m ^{∗} x²ⁿ), wobei n eine ganze Zahl ist und wobei n > 0.

Im dargestellten Ausführungsbeispiel handelt es sich beispielsweise um eine Parabel vierten Grades - d. h. n=2 -, wobei m=1 gewählt ist.

Die Umfangsrillen 4 und 5 sind mit einer in radialer Richtung R gemessenen maximalen Profiltiefe P_{T} ausgebildet.

Der Abstand a ist mit 0mm ≤ a ≤ 2 mm - beispielsweise mit a = 1,5 mm - ausgebildet. Der in radialer Richtung R gemessene Abstand h₁ zwischen der radial äußeren Oberfläche 9 der Profilblockelemente 6 und dem Maximum 13 der Stege 8 ist mit 0mm < h₁ ≤ (1/3 P_{T}) ausgebildet.

In Fig.2 und Fig.3 ist ein Ausführungsbeispiel dargestellt, bei dem der Rillengrund 10 im Erstreckungsabschnitt der Breite a zwischen dem jeweiligen Steg 8 und der unmittelbar benachbarten Umfangsrille 4 bzw. 5 in radialer Richtung R im Abstand hₐ vom Maximum 13 und bei dem Rillengrund 10 im Erstreckungsabschnitt zwischen den beiden Stegen 8 der Querrille 7 in radialer Richtung R im Abstand hᵢ vom Maximum 13 ausgebildet ist, wobei hᵢ < hₐ und (h₁ + hₐ) ≤ P_{T}. Im dargestellten Ausführungsbeispiel ist (h₁ + hₐ) = P_{T} ausgebildet.

Der Abstand hᵢ ist mit (0,5 hₐ) ≤ hᵢ ≤ hₐ ausgebildet. Im dargestellten Ausführungsbeispiel ist hᵢ = (0,8 hₐ) ausgebildet.

In einem nicht dargestellten Ausführungsbeispiel ist hₐ = hᵢ und somit der Rillengrund 10 zwischen den Stegen 8 und zwischen den Stegen 8 und den jeweils angrenzenden Umfangsrillen 4 bzw.5 jeweils mit gleichem radialem Abstand vom Maximum 13 ausgebildet.

In einer anderen nicht dargestellten Ausführung ist die Konturlinie 14 als Teil einer ausgehend vom in radialer Richtung R nach außen gebildeten maximalen Erstreckungspunkt 13 des Steges 8 in radialer Richtung R nach innen geöffneten Halbellipse ausgebildet, wobei die längere der beiden Hauptachsen der Ellipse in radialer Richtung R erstreckt ausgebildet ist. Der maximale Erstreckungspunkt 13 liegt auf der längeren der beiden Hauptachsen der Ellipse. Die kürzere der beiden Hauptachsen erstreckt sich senkrecht hierzu in einer radialen Position unterhalb des Rillengrundes 10 der Querrille 7 und verläuft bei Anwendung auf das dargestellte Ausführungsbeispiel in axialer Richtung A des Fahrzeugluftreifens.

In Fig. 2 ist ein weiteres Ausführungsbeispiel dargestellt, bei der zusätzlich zwischen Stegflanke 12 und Rillengrund 10 ein abgerundeter Übergang 16 und zwischen Stegflanke 14 und Rillengrund 10 ein abgerundeter Übergang 15 der Konturlinie 14 ausgebildet ist.

Die Abrundung im Übergang 16 ist im dargestellten Ausführungsbeispiel mit einem Krümmungsradius von 1 mm ausgebildet. In anderer nicht dargestellter Ausführung ist die Abrundung des Übergangs 16 mit dem gleichen Krümmungsradius - beispielsweise 3mm - ausgebildet, der für den Übergang zwischen der zu den Profilblockelementen 6 weisenden Rillenwand der angrenzenden Umfangsrille 4 bzw. 5 zum Rillengrund der Umfangsrille 4 bzw.5 ausgebildet ist.

Die Abrundung im Übergang 15 ist im dargestellten Ausführungsbeispiel mit einem Krümmungsradius von kleiner oder gleich 1 mm - beispielsweise von 1mm - ausgebildet.

### Bezugszeichenliste

- 1: Profilrippe
- 2: Profilblockreihe
- 3: Profilrippe
- 4: Umfangsrille
- 5: Umfangsrille
- 6: Profilblockelement
- 7: Querrille
- 8: Steg
- 9: Radial äußere Oberfläche
- 10: Rillengrund
- 11: Stegflanke
- 12: Stegflanke
- 13: Maximum
- 14: Stegkontur
- 15: Abrundung
- 16: Abrundung

## Patentansprüche

1. Fahrzeugluftreifen - insbesondere für Personenkraftwagen - mit Laufstreifenprofil mit Rillen (7), welche jeweils zwei radial erhabene Profilelemente (6) voneinander trennen, mit wenigstens einem in einer Rille (7) ausgebildeten Steg (8), welcher quer zur Haupterstreckungsrichtung der Rille (7) durch die Rille (7) hindurch erstreckt ausgebildet ist und die beiden Profilelemente (6) miteinander verbindet und welcher in radialer Richtung R ausgehend vom Rillengrund (10) der Rille (7) bis in einen radialen Abstand h₁ > 0mm von der die Bodenkontaktoberfläche bildenden Mantelfläche (9) des Laufstreifenprofiles erstreckt ausgebildet ist, wobei **die Rille (7) eine Quer- oder Schrägrille bildet,**
**dadurch gekennzeichnet,**
**dass** der Steg (8) in seinen senkrecht zu seiner von Profilelement (6) zu Profilelement (6) gerichteten Haupterstreckungsrichtung ausgebildeten Querschnittebenen längs seiner radialen Erstreckung von radial innen nach radial außen hin jeweils mit einer progressiv abnehmenden Breite b ausgebildet ist.

2. Fahrzeugluftreifen gemäß den Merkmalen von Anspruch 1,
wobei der in den senkrecht zu seiner von Profilelement (6) zu Profilelement (6) gerichteten Haupterstreckungsrichtung ausgebildeten Querschnittebenen gebildete Querschnitt des Steges (8) mit einer Querschnittskontur (14) mit von der einen Flanke (11) des Steges (8) bis zur anderen Flanke (12) des Steges (8) mit monoton fallender Steigung zu der zur Radialen R senkrecht ausgebildeten Achse in der Querschnittebene verlaufend ausgebildet ist.

3. Fahrzeugluftreifen gemäß den Merkmalen von einem oder mehreren der vorangegangenen Ansprüche,
wobei der Querschnitt **des Steges (8)** mit einer Querschnittskontur (14) ausgebildet ist, die eine Parabel mit in radialer Richtung R nach innen hin geöffneten Schenkeln (11,12) bildet.

4. Fahrzeugluftreifen gemäß den Merkmalen von einem oder mehreren der Ansprüche 1 bis 3,
wobei der Querschnitt **des Steges (8)** mit einer Querschnittskontur (14) ausgebildet ist, die die Hälfte einer Ellipse bildet, deren längere Hauptachse im Wesentlichen in radialer Richtung R erstreckt ist.

5. Fahrzeugluftreifen gemäß den Merkmalen von einem oder mehreren der vorangegangenen Ansprüche,
wobei die beiden den Steg (8) begrenzenden Stegflanken (11,12) im Querschnitt mit abgerundetem Übergang (15,16) zum Rillengrund (10) ausgebildet sind.

6. Fahrzeugluftreifen gemäß den Merkmalen von einem oder mehreren der vorangegangenen Ansprüche,
wobei die Profilelemente (6) Profilblockelemente einer Profilblockreihe (2) und die Rille (7) eine Quer- oder Schrägrille der Profilblockreihe (2) bildet.

7. Fahrzeugluftreifen gemäß den Merkmalen von Anspruch 6,
wobei in der Rille (7) zwei in axialer Richtung A des Reifens von einander beabstandete Stege (8) ausgebildet sind, die die beiden Profilblockelemente (6) miteinander verbinden.

8. Fahrzeugluftreifen gemäß den Merkmalen von Anspruch 6 oder 7,
wobei der Steg (8) mit einem Abstand a zur nächstgelegenen Umfangsrille (4,5) ausgebildet ist mit 0mm≤ a ≤ 2mm ausgebildet ist.

## Claims

1. Pneumatic vehicle tyre - in particular for passenger motor vehicles - having a tread profile with channels (7) which separate in each case two radially elevated profile elements (6) from one another, having at least one web (8) which is formed in a channel (7) and which is formed so as to extend through the channel (7) transversely to the main extent direction of the channel (7) and which connects the two profile elements (6) to one another and which, in a radial direction R, is formed so as to extend from the channel base (10) of the channel (7) to a radial distance h₁ > 0 mm from the lateral surface (9), which forms the ground contact surface, of the tread profile, wherein the channel (7) forms a transverse or oblique channel,
**characterized in that** the web (8), in its cross-sectional planes formed perpendicular to its main extent direction directed from profile element (6) to profile element (6), is formed in each case with a progressively decreasing width b along its radial extent from radially inside to radially outside.

2. Pneumatic vehicle tyre according to the features of Claim 1,
wherein the cross section of the web (8) formed in the cross-sectional planes formed perpendicular to its main extent direction directed from profile element (6) to profile element (6) is formed so as to run in the cross sectional plane with a cross-sectional contour (14) with, from one flank (11) of the web (8) to the other flank (12) of the web (8), with a monotonously decreasing gradient with respect to the axis formed perpendicular to the radial R.

3. Pneumatic vehicle tyre according to the features of one or more of the preceding claims,
wherein the cross section of the web (8) is formed with a cross-sectional contour (14) which forms a parabola with limbs (11, 12) which are open inwards in the radial direction R.

4. Pneumatic vehicle tyre according to the features of one or more of Claims 1 to 3,
wherein the cross section of the web (8) is formed with a cross-sectional contour (14) which forms half of an ellipse, the relatively long main axis of which extends substantially in the radial direction R.

5. Pneumatic vehicle tyre according to the features of one or more of the preceding claims,
wherein the two web flanks (11, 12) which delimit the web (8) are formed, in cross section, with a rounded transition (15, 16) to the channel base (10) .

6. Pneumatic vehicle tyre according to the features of one or more of the preceding claims,
wherein the profile elements (6) form profile block elements of a profile block row (2) and the channel (7) forms a transverse or oblique channel of the profile block row (2).

7. Pneumatic vehicle tyre according to the features of Claim 6,
wherein, in the channel (7), two webs (8) are formed which are spaced apart from one another in an axial direction A of the tyre and which connect the two profile block elements (6) to one another.

8. Pneumatic vehicle tyre according to the features of Claim 6 or 7,
wherein the web (8) is formed at a distance a from the closest circumferential channel (4, 5), where 0 mm ≤ a ≤ 2 mm.

## Revendications

1. Pneumatique de véhicule, en particulier de voiture particulière, comprenant un profilé de bande de roulement pourvu de rainures (7) qui séparent chacune deux éléments de profilé (6) surélevés radialement l'un de l'autre, au moins une nervure (8) qui est formée dans une rainure (7), laquelle est conçue de manière à s'étendre à travers la rainure (7) transversalement à la direction d'extension principale de la rainure (7) et relie les deux éléments de profilé (6) l'un à l'autre et laquelle est conçue de manière à s'étendre dans la direction radiale R depuis le fond (10) de la rainure (7), jusqu'à une distance radiale h₁ > 0 mm de la surface d'enveloppe (9), formant la surface de contact de fond, du profilé de bande de roulement, la rainure (7) formant une rainure transversale ou oblique, **caractérisé en ce que** la nervure (8) est formée dans ses plans de coupe transversale, formés perpendiculairement à sa direction d'extension principale orientée d'un élément de profilé (6) vers un élément de profilé (6), le long de son extension radiale depuis l'intérieur radialement vers l'extérieur radialement avec respectivement une largeur b progressivement décroissante.

2. Pneumatique de véhicule selon les caractéristiques de la revendication 1,
la section transversale de la nervure (8), formée dans les plans de coupe transversale, formés perpendiculairement à sa direction d'extension principale orientée d'un élément de profilé (6) vers un élément de profilé (6), est formée avec un contour en coupe transversale (14) de manière à s'étendre dans le plan de coupe transversale avec d'un flanc (11) de la nervure (8) à l'autre flanc (12) de la nervure (8) avec une pente décroissante de manière monotone par rapport à l'axe formé perpendiculairement à la radiale R.

3. Pneumatique de véhicule selon les caractéristiques de l'une au moins des revendications précédentes,
la section transversale de la nervure (8) étant formée avec un contour en coupe transversale (14) qui forme une parabole pourvue de branches (11, 12) qui sont ouvertes vers l'intérieur dans la direction radiale R.

4. Pneumatique de véhicule selon les caractéristiques de l'une au moins des revendications 1 à 3,
la section transversale de la nervure (8) étant formée avec un contour en coupe transversale (14) qui forme la moitié d'une ellipse dont l'axe principal plus long s'étend sensiblement dans la direction radiale R.

5. Pneumatique de véhicule selon les caractéristiques de l'une au moins des revendications précédentes,
les deux flancs (11, 12) qui délimitent la nervure (8) étant formés en section transversale avec une transition arrondie (15, 16) vers le fond (10) de la rainure.

6. Pneumatique de véhicule selon les caractéristiques de l'une au moins des revendications précédentes,
les éléments de profilé (6) formant des éléments de blocs de profilé d'une rangée de blocs de profilé (2) et la rainure (7) formant une rainure transversale ou oblique de la rangée de blocs de profilé (2).

7. Pneumatique de véhicule selon les caractéristiques de la revendication 6,
deux nervures (8) distantes l'une de l'autre dans la direction axiale A du pneu étant formées dans la rainure (7), lesquelles nervures relient les deux éléments de blocs de profilé (6) entre eux.

8. Pneumatique de véhicule selon les caractéristiques de la revendication 6 ou 7,
la nervure (8) étant formée avec une distance a par rapport à la rainure circonférentielle (4, 5) la plus proche et étant réalisée avec 0 mm ≤ a ≤ 2mm.
